# EUROPÄISCHE PATENTSCHRIFT

(11) **EP 1 283 511 B1**
(45) Veröffentlichungstag und Bekanntmachung des Hinweises auf die Patenterteilung: **14.05.2008**
(21) Anmeldenummer: 02016049.5
(22) Anmeldetag: 19.07.2002
(51) Int. Cl.: G09F 3/02, G09F 3/10

(54) **Etikett mit erhöhter Fälschungssicherheit**
Label with increased falsification safety
Etiquette avec protection contre la falsification ameliorée

(30) Priorität: 11.08.2001 DE 10139653
(43) Veröffentlichungstag der Anmeldung: 12.02.2003
(73) Patentinhaber: tesa AG, 20253 Hamburg (DE)
(72) Erfinder: Reiter, Sven, 22305 Hamburg (DE); Koops, Arne, 23881 Breitenfelde (DE); Harder, Christian, Dr., 22589 Hamburg (DE); Engeldinger, Hans Karl, 22451 Quickborn (DE)

(56) Entgegenhaltungen:
- EP-A2- 0 518 067
- DE-C1- 19 909 723
- DE-U1- 8 130 861
- DE-U1- 29 803 159

## Beschreibung

Die Erfindung betrifft ein Etikett mit erhöhter Fälschungssicherheit aus einer Trägerschicht, insbesondere Lackschicht, ganz insbesondere aus duroplastischem Lack zur Laserbeschriftung, wobei auf der unteren Seite der Trägerschicht eine Klebeschicht vorhanden ist.

Zur Kennzeichnung von Teilen an Fahrzeugen, Maschinen, elektrischen und elektronischen Geräten finden zunehmend technische Etiketten Verwendung, so als Typenschilder, als Steueretiketten für Prozeßabläufe sowie als Garantie- und Prüfplaketten.

Vielfach beinhalten diese Anwendungen inhärent die Anforderung nach einem mehr oder minder ausgeprägten Maß an Fälschungssicherheit. Diese Fälschungssicherheit gilt vordergründig für den Zeitraum der Anbringung und die gesamte Nutzungsdauer auf dem zu kennzeichnenden Teil. Eine Entfernung oder Manipulation soll nur unter Zerstörung oder sichtbarer, irreversibler Veränderung möglich sein.
Um die Fälschungssicherheit der Etiketten nochmals zu erhöhen, ist zunehmend an die Etiketten selbst die Forderung gestellt worden, durch eine besondere Ausgestaltung zur Sicherheit beizutragen.

In besonders sensitiven Anwendungsfeldern muß eine Sicherheitsstufe auch für die Herstellung der Etiketten gelten. Eine zu leichte Beschaffung und Kennzeichnung derartiger Etiketten sowie die Herstellung von Plagiaten würden Unbefugten die nicht autorisierte Verbreitung von Artikeln ermöglichen.

Dieser zusätzlichen Fälschungssicherheit darf aber eine nachträgliche Identifizierung des verklebten Etiketts auf Originalität durch eine schnelle, eindeutige, einfache und zerstörungsfreie Methode nicht entgegenstehen.

Die Kennzeichnung mittels Laseretiketten besitzt gerade in der Automobilindustrie, insbesondere für hochwertige Markierungen, einen zunehmenden Stellenwert. Auf diese Weise werden Informationen und Hinweise wie Reifendruck oder Treibstoffart für den späteren Nutzer auf verschiedensten Bauteilen des Automobils plaziert. Auch in den vorgeschalteten Fertigungsstufen können wichtige Produktionsdaten über ein Laseretikett transportiert werden.

Für diese Anwendung kann das Etikett mit einem Barcode beschriftet werden. Durch ein geeignetes Lesegerät erhält ein Montageteam die Möglichkeit, direkt an der Fertigungsstraße, Informationen über Modell, Farbe und Sonderausstattung durch den Barcode auszulesen.

Neben diesen Standardinformationen werden aber auch sensible Sicherheitsdaten wie Fahrgestell- und Identifikationsnummern durch Etiketten am Fahrzeug plaziert. Im Falle von Diebstahl oder Unfall sind diese Informationen für eine Rückverfolgung von Fahrzeug und Fertigungsstufen von großer Bedeutung.

Aufgrund der im Vergleich zu konventionellen Drucksystemen für Etiketten hohen Anschaffungskosten einer Laserbeschriftungsanlage ist die direkte Nachahmung des Schildersatzes für viele kriminelle Organisationen nicht möglich. Fälschungen, die durch herkömmliche Druckverfahren hergestellt werden, sind visuell leicht zu erkennen. Aus diesem Grund wird vielfach versucht, den Schildersatz von Fahrzeugen abzulösen und an anderen Fahrzeugen erneut zu applizieren.

Durch ein abgelöstes Etikett kann einem gestohlenen Fahrzeug leicht eine andere Identität (neue Fahrgestellnummer) gegeben werden. Ein Zurückverfolgen des Fahrzeugs ist dadurch so gut wie unmöglich.

Das eingesetzte Etikettenmaterial muß daher, um Manipulationsversuchen entgegenzuwirken, möglichst fälschungssicher sein. Es darf sich nicht zerstörungsfrei vom Verklebungsgrund ablösen.

Zusätzliche Sicherheit wird über die hohe Brüchigkeit des Materials in Kombination mit hohen Klebkräften erreicht. Die Klebkraft des Materials auf dem Haftgrund spielt eine große Rolle. Sie ist für den Widerstand gegen einen Manipulationsversuch durch Ablösen ausschlaggebend.

Neben dem Standardmaterial gibt es modifizierte Etiketten, die durch weitere Sicherheitsmerkmale wie Prägungen, Hologramme oder einen bleibenden UV-Abdruck (footprint) eine Nachahmung des Materials unmöglich machen sollen.

Leistungsfähige steuerbare Laser zum Einbrennen von Markierungen wie Schriften, Codierungen und dergleichen sind verbreitet. An das zu beschriftende Material werden unter anderem folgende Anforderungen gestellt:
- Es soll schnell beschriftbar sein.
- Es soll ein hohes räumliches Auflösungsvermögen erreicht werden.
- Es soll in der Anwendung möglichst einfach sein.
- Die Zersetzungsprodukte sollen nicht korrosiv wirken.

Darüber hinaus werden für besondere Fälle zusätzliche Eigenschaftsmerkmale gefordert:
- Die mittels Belaserung hergestellten Zeichen sollen so kontrastreich sein, daß sie auch unter ungünstigen Bedingungen über weite Entfernungen fehlerfrei gelesen werden können.
- Hohe Temperaturbeständigkeit soll gegeben sein, beispielsweise bis über 200 °C.
- Gute Beständigkeit gegen Bewitterung, Wasser und Lösungsmittel ist erwünscht.

Bekannte, hierfür eingesetzte Materialien, wie bedrucktes Papier, eloxiertes Aluminium, lackiertes Blech oder PVC-Folien, werden nicht allen diesen Anforderungen gerecht.

In der DE G 81 30 861 wird ein mehrschichtiges Etikett aus einer dünnen und einer dicken selbsttragenden, deckend pigmentierten Lackschicht offenbart. Beide Schichten bestehen aus einem elektronenstrahlgehärteten lösungsmittelfrei aufgetragenen Lack, wobei die Schichtdicken unterschiedlich sind. Die Beschriftung des Etiketts erfolgt dadurch, daß mit Hilfe eines Lasers die obere dünnere Lackschicht weggebrannt wird, so daß die untere dickere Lackschicht sichtbar wird, wobei die untere Schicht bevorzugt eine Kontrastfarbe zur ersteren aufweist.

Bei dieser Beschriftung handelt es sich um eine Art von Gravur, womit Manipulationsmöglichkeiten wie bei traditionellen Bedruckungen mit Farben und Tinten entfallen. Das Etikett ist durch die eingesetzten Rohstoffe und den Herstellungsprozeß derart spröde eingestellt, daß eine Entfernung desselben von den Haftuntergründen fast immer nur unter Zerstörung möglich ist.

Derartige Laseretiketten werden besonders für eine rationelle und variable Beschriftung zur Herstellung von Schildersätzen eingesetzt. Diese Schildersätze enthalten die komplette Anzahl der Etiketten, die zum Beispiel in einem Kraftfahrzeug an kennzeichnungspflichtigen Bauteilen erforderlich sind (VIN-Schild, Schilder über Reifendruck, Kofferraumbeladung, Kenndaten für Motoren und Aggregate u.a.).

In punkto Fälschungssicherheit bietet eine Laserfolie, wie sie aus der DE G 81 30 861 bekannt und beispielsweise als tesa 6930 ® von der Firma Beiersdorf erhältlich ist, aufgrund ihres sehr spröden Produktaufbaus gute Voraussetzungen, eventuelle Manipulationsversuche zu dokumentieren und somit zu vereiteln.

Das laserbeschriftete Etikett ist nur unter sehr hohem Aufwand und bestimmten Voraussetzungen zerstörungsfrei in einem Stück von seinem ursprünglichen Verklebungsuntergrund zu entfernen.

Dieser Aufwand ist so hoch, daß das besagte Etikett alle gängigen Ablösbarkeitsprüfungen der wichtigsten Prüfinstitutionen wie zum Beispiel "Prüfung von Fabrikschildern aus Platten, Blechen und Folien sowie deren Befestigung durch Kleben" vom Kraftfahrtbundesamt und "Marking und Labeling System Materials MH 18055" von Underwriters Laboratories Inc. problemlos besteht.

Diese zertifizierte Fälschungssicherheit, welche immer in Relation zu dem zur Manipulation notwendigen Aufwand zu sehen ist, muß sich zunehmend gewachsenen Ansprüchen hinsichtlich "Originalitätssicherung" stellen. Dies bedeutet, daß mit Hilfe eines verklebten Laseretiketts dokumentiert werden soll, daß es sich bei dem markierten Bauteil um ein Original handelt. Da, wie eingangs bereits erwähnt, die Laser-Folie ebenso wie Laserbeschriftungsanlagen am Markt frei erhältlich sind, besteht hier eine Möglichkeit für organisierte Kriminalität in großem Umfang. Gestohlene Fahrzeuge können mit Hilfe der genannten Hardware und der frei erhältlichen Laserfolie mit neuen Etiketten ausgerüstet werden, die von den eigentlichen Originaletiketten kaum beziehungsweise gar nicht unterscheidbar sind.

In der EP 0 645 747 A wird ein laserbeschriftbares mehrschichtiges Etikettenmaterial gezeigt, das sich aus einer ersten Schicht, einer zweiten, von der ersten Schicht optische differierenden Schicht zusammensetzt, wobei die erste Schicht mittels Laserstrahlung entsprechend einem gewünschten Schrift- oder Druckbild unter Sichtbarmachung der Oberfläche der zweiten Schicht entfernbar ist. Zwischen den Schichten ist weiterhin eine eine Trägerschicht bildende transparente Kunststoffolie angeordnet.

Die DE 44 21 865 A1 zeigt ein Einschichtlaseretikett aus einer Trägerschicht aus Kunststoff, die ein Additiv enthält, das unter Laserbestrahlung einen Farbumschlag zeigt.

Die Trägerschicht ist einseitig mit einer Selbstklebemasse beschichtet, welche gegebenenfalls mit einem Trennpapier oder einer Trennfolie abgedeckt ist.

Mit der DE 199 09 723 A1 ist eine Sicherheitsfolie bekannt geworden, die eine Trägerschicht aufweist, in der ein Identifikationsmedium enthalten ist. Mit Hilfe eines berührungslosen Beschriftungsprozesses können die Diffusionseigenschaften dieses Identifikationsmediums gezielt selektiv und lokal verändert werden. Wird die so beschriftete Sicherheitsfolie auf ein Werkstück aufgeklebt, so diffundiert das Identifikationsmedium zur Substratoberfläche hin und bewirkt dort eine nachweisbare Reaktion. Dabei erfolgt diese Diffusion bzw. Reaktion nur in solchen Bereichen der Substratoberfläche, in denen durch den Beschriftungsvorgang die Diffusionsfähigkeit ausgelöst bzw. nicht behindert wurde. Somit ermöglicht die Sicherheitsfolie eine eindeutige Beschriftung und Identifikation des Werkstücks.

Die Sicherheitsfolie wird mittels eines berührungslosen Verfahrens beschriftet. So kann auch im Fabrikumfeld eine schmutzunempfindliche, schnelle, flexibel variierbare Beschriftung erreicht werden. Die Beschriftung der Sicherheitsfolie - und somit die Änderung der Diffusionseigenschaften des Identifikationsmediums - kann insbesondere mit Hilfe elektromagnetischer Strahlung erfolgen. Besonders vorteilhaft zur Beschriftung der Sicherheitsfolie ist der Einsatz eines Lasers, mit Hilfe dessen sowohl eine temperatur- als auch eine lichtsensitive Beschriftung erfolgen kann (wobei der Begriff "Licht" in diesem Fall den gesamten dem Laser zugänglichen Bereich des elektromagnetischen Spektrums umfaßt). Laser haben den zusätzlichen Vorteil, kontrastreiche Beschriftungen mit einer beliebigen Wahl des Musters zu ermöglichen, schnelle Änderungen des Beschriftungsmusters zu gestatten und prozeßsicher im Fabrikumfeld einsetzbar zu sein.

Bei allen oben dargelegten Etiketten besteht nach dem Aufbringen auf ein Gegenstand eine hohe Fälschungssicherheit, denn die Etiketten lassen sich nur mit technisch ausgefeilten, somit teuren und somit nicht jedem zugänglichen Lasern beschriften, so daß die Ausrüstung, um damit die genannten Etiketten kopieren oder verändern zu können, zumindest in der Vergangenheit zumeist teurer war als das interessierende Produkt. Weiterhin bewirkt die hohe Sprödigkeit des Materials bei Manipulations- und Entfernungsversuchen eine Zerstörung des Etiketts.

Mit dem technischen Fortschritt sind derartige Laser allerdings immer günstiger geworden, so daß die Anschaffung dieser insbesondere bei größeren Produkten wie beispielsweise Kraftfahrzeugen, die u.a. im Motorenraum zur Kennzeichnung mit einem derartigen Etikett versehen sind, in einer wachsenden Zahl von Fällen lohnte.

Dann wird die Herstellung von nicht autorisierten Plagiaten durch die leichte und frei zugängliche Beschaffung von Laseretikettenvormaterial und zwischenzeitig weite Verbreitung von Laserbeschriftungsanlagen wesentlich vereinfacht.

Beim Einsatz von flachen, scharfen Klingen gelingt es darüber hinaus, Etiketten vollständig vom Substrat abzutrennen. Besonders auf Kunststoffuntergründen wie Polyethylen oder Polypropylen zeigt der Verbund zwischen Klebmasse und Untergrund Schwächen.

Trotz einer erhöhten Klebkraft auf metallischen oder lackierten Substraten ist es auch dort möglich, durch Einsatz spezieller Werkzeuge einen Teil der Etiketten ohne Zerstörung abzulösen. Ein spezielles Klingenwerkzeug kann in einem flachen Winkel unter das Etikett geführt werden. Durch vorsichtige Schneidebewegungen ist es möglich, eine Kante anzuheben, wodurch ein so genannter Anfasser entsteht. Auf diese Weise erzeugt man einen Angriffspunkt, der ein Ablösen vereinfacht.

Weiterhin besteht die ständige Forderung neben der Verhinderung von Fälschungen und der Verhinderung von Plagiatverbreitungen das insbesondere im Automobil einzusetzende Etikett kundenspezifisch zu individualisieren wird und exklusiv an den Kunden zu liefern.

Diese Individualisierung muß zwei wichtige Kriterien erfüllen, nämlich
- das Etikett muß leicht und schnell identifizierbar sein und
- das Etikett darf nicht nachstellbar sein.

Mittels dieser beider Kriterien kann man gewährleisten, daß nur die autorisierte Instanz, in diesem Falle der Automobilist, in der Lage ist, Bauteile als Originale zu definieren und zu kennzeichnen.

Erste Lösungsversuche, das Trägermaterial des Etiketts zu individualisieren, sind in der DE 199 04 823 A1 offenbart. Hier wird ein Verfahren zur Herstellung einer Folie beschrieben, bei dem zunächst eine Stützträgerfolie mittels eines Prägewerkzeuges geprägt wird, wobei das Prägewerkzeug holographische Strukturen aufweist. Anschließend wird eine Folie auf der geprägten Stützträgerfolie erzeugt, so daß sich auf der Folie zumindest ein Hologramm abzeichnet.

Aufgabe der Erfindung ist es, ein Etikett zu schaffen, das der genannten Forderung der verbesserten Fälschungssicherheit gerecht wird, insbesondere die Fälschungssicherheit der laserbeschriftbaren Folien über eine Modifikation der Klebmasse zu erhöhen, die Verbundeigenschaften der Folie so zu verbessern, daß ein verklebtes Etikett, selbst mit Hilfe eines Schneidewerkzeugs, nicht zerstörungsfrei ablösbar ist, dabei weiterhin insbesondere hohen Kontrast, hohes Auflösungsvermögen, hohe Temperaturbeständigkeit und einfache Anwendungsmöglichkeit aufweist.

Gelöst wird diese Aufgabe durch ein Etikett, wie es gemäß Hauptanspruch beschrieben ist. Gegenstand der Unteransprüche sind besonders vorteilhafte Ausführungsformen des Erfindungsgegenstands sowie die Verwendung desselben.

Dementsprechend betrifft die Erfindung ein Etikett mit erhöhter Fälschungssicherheit aus zumindest einer Trägerschicht, wobei auf der unteren Seite der Trägerschicht eine Klebeschicht vorhanden ist. Die Klebeschicht setzt sich aus einem Haftkleber und/oder Heißkleber und einem durch Hitze aktivierbaren Reaktivkleber zusammen.

In einer hervorragenden Ausgestaltung des Etiketts sind in der Klebeschicht der Haftkleber und/oder Heißkleber mit dem durch Hitze aktivierbaren Reaktivkleber vermischt .

Weiter vorteilhaft sind in der Klebeschicht der Haftkleber und/oder Heißkleber und der durch Hitze aktivierbare Reaktivkleber abwechselnd in Streifen angeordnet.

In diesem Fall bildet der hitzeaktive Reaktivkleber eine Brücke zwischen Trägerschicht und Verklebungssubstrat, so daß der Reaktivkleber bei der Aktivierung zu beiden eine direkte Verbindung aufweist.

Neben der streifenförmigen Anordnung der Kleber sind aber auch alle anderen beliebigen partiellen geometrischen Anordnungen und Formen möglich, insbesondere punktförmig, mit wechselnden Abständen der Kleber usw.

Die Auswahl der Anordnung richtet sich dabei nach dem jeweiligen Einsatzzweck und Einsatzort des Etiketts.

In einer weiteren Ausführungsform wird der Reaktivkleber in partiellen Streifen oder Punkten auf die Träger- insbesondere Laserlackschicht auflaminiert oder aufgedruckt. Die Klebmasse wird dann in einem zweiten Beschichtungsschritt auf die modifizierte Trägerschicht beschichtet.

Der Vorteil dieser Variante liegt in der vollflächig vorhandenen Dauerklebrigkeit.

Sodann stellt eine weitere vorteilhafte Ausführungsform dar, wenn in der Klebeschicht der durch Hitze aktivierbare Reaktivkleber auf den Haftkleber und/oder Heißkleber auflaminiert, aufgedruckt oder aufgelegt beziehungsweise aufgeklebt ist. ist, insbesondere streifenförmig und/oder punktförmig.

In einer vorteilhaften Ausführungsform der Erfindung besteht das Etikett aus einer
a) Trägerschicht aus Kunststoff, die
b) ein Additiv enthält, das unter Laser-Bestrahlung einen Farbumschlag zeigt, und die
c) einseitig mit einer Klebemasse, die sich aus einem Haftkleber und/oder Heißkleber und einem durch Hitze aktivierbaren Reaktivkleber zusammensetzt, beschichtet ist, welche
d) gegebenenfalls mit einem Trennpapier oder einer Trennfolie abgedeckt ist.

Die Trägerschicht weist vorzugsweise eine Dicke von 10 bis 200 µm, insbesondere von 50 bis 100 µm, auf.

Geeignete Trägerschichten bestehen weiterhin aus Kunststoffen wie Polyester, Poly-(Meth)acrylate, Polycarbonat und Polyolefine sowie aus strahlenhärtbaren Systemen wie ungesättigte Polyester, Epoxy-, Polyester- und Urethanacrylate, wie sie auch für UV-Druckfarben Anwendung finden, insbesondere solchen aus einem Basispolymeren gemäß DE G 81 30 861, nämlich aliphatischen Urethanacrylat-Oligomeren.

Das Additiv kann ein Pigment sein, insbesondere Kupferhydroxidphosphat oder Iriodin, und zusätzlich zu dem Additiv Titandioxid verwendet werden.

Geeignete Additive sind insbesondere Farbpigmente und Metallsalze, vor allem Kupferhydroxidphosphat oder auch Iriodin, ein Perlglanzpigment, wie es von der Firma Merck im Handel erhältlich ist. Diese Additive werden dem Basispolymeren (wie zum Beispiel in DE G 81 30 861 beschrieben) insbesondere in der Größenordnung von einigen Promille bis maximal 10 Gew.-%, bevorzugt in Mengen von 0,1 bis 10 Gew.-%, insbesondere von 0,5 bis 5 Gew.-% bezogen auf das Gesamtgewicht der Trägerschicht, zugemischt. Nach Herstellung von flächigem Material durch bekannte Verfahren wie Extrusion, Giessen, Beschichten etc., mit gegebenenfalls nachträglicher strahlenchemischer Vernetzung, werden derartige Folien mit der Klebeschicht beschichtet.

Eine Abdeckung mit silikonisiertem Trennpapier ergibt dann den typischen Aufbau für Vormaterial, aus dem sich Etiketten fertigen lassen.

Bei Nutzung der Standardlaser, speziell der weitverbreiteten Nd-YAG-Festkörperlaser mit einer Wellenlänge von 1,06 µm, findet im Auftreffpunkt des Lasers auf die Materialoberfläche eine Farbänderung oder ein Farbumschlag statt und es werden scharfe, kontrastreiche Beschriftungen und Kennzeichnungen erhalten.

Die Trägerschicht besteht in einer weiteren vorteilhaften Ausführungsform aus einem Lack, insbesondere aus einem gehärteten Lack, vorzugsweise einem strahlengehärteten Lack, besonders vorzugsweise aus einem elektronenstrahlengehärteten Polyurethanacrylat-Lack. In einer alternativen Ausführungsform ist die Trägerschicht aus einem Polybutylenterephthalat.

Weiter vorzugsweise wird auf der oberen Seite der Lackschicht, also der Seite, die der Seite gegenüberliegt, auf die Klebeschicht aufgebracht ist, eine äußere insbesondere selbsttragende, deckend pigmentierte Lackschicht vorzugsweise lösungsmittelfrei aufgetragen, die anschließend insbesondere elektronenstrahlgehärtet wird.

Die obere Lackschicht, gebildet von einem gehärteten, also vernetzten Lack, weist vorzugsweise eine Stärke von 1 bis 20 µm, insbesondere 5 bis 15 µm, auf, die Lackschicht vorzugsweise eine Stärke von 20 bis 500 µm, insbesondere 30 bis 100 µm.

Prinzipiell sind vier Lacktypen verwendbar, sofern ihre Stabilität ausreicht, zum Beispiel säurehärtende Alkydmelaminharze, additionsvernetzende Polyurethane, radikalisch härtende Styrollacke und ähnliche. Besonders vorteilhaft sind jedoch strahlenhärtende Lacke, da sie sehr schnell ohne langwieriges Verdampfen von Lösungsmitteln oder Einwirken von Wärme aushärten. Solche Lacke sind zum Beispiel von A. Vrancken beschrieben worden (Farbe und Lack 83,3 (1977) 171).

Beide Lackschichten weisen in einer bevorzugten Ausführungsform gegeneinander einen maximalen Farbkontrast auf.

Denn das erfindungsgemäße Etikett besteht vorzugsweise aus einer undurchsichtigen oberen Schicht, die von einem Laserstrahl leicht durchbrannt werden kann, einer unteren Schicht insbesondere in einer Kontrastfarbe zur ersten, wobei die untere Schicht so beschaffen ist, daß sie vom Laserstrahl nicht leicht durchbrannt wird.

Als besonders vorteilhaft hat es sich herausgestellt, wenn in der jeweiligen Lackschicht ein Additiv zu mindestens 5 Gew.-%, bevorzugt 7 Gew.-%, enthalten ist, das fluoreszierend oder phosphoreszierend ist oder das zur magnetischen oder elektrischen Kennzeichnung geeignet ist.

In einer weiteren vorteilhaften Ausführungsform wird entweder auf die Lackschicht oder auf die zweite Lackschicht eine Farbe mit einem fluoreszierenden oder phosphoreszierenden Additiv aufgedruckt, und zwar derart, daß beim fertigen Etikett die Farbschicht zwischen den beiden Lackschichten ist.

Bei zwei- und mehrschichtigen Etiketten kann in die für die Schrift maßgebliche Lackschicht ein geeignetes Additiv eingearbeitet werden. Die äußere Lackschicht selbst, zum Beispiel für die hochglänzenden Typenschilder, bleibt somit unverändert, erst bei der Lasergravur wird die Lackschicht partiell an den Stellen der Beschriftung freigelegt. Befinden sich in der beispielsweise weißen Lackschicht Farbpigmente, Farbpartikel, farbige Fasern u.ä., so werden diese an den gravierten Stellen sichtbar.

Bei den farbgebenden Partikeln kann es sich um feine Farbpigmente handeln oder aber auch bevorzugt um sichtbare Partikel in der Größenordnung von 0,1 bis 5 mm. Bei Verwendung feingemahlener Farbpigmente wird eine leichte Farbtonveränderung der Schriftzüge erzeugt, mit den sichtbaren Partikeln ein charakteristisches Farbmosaik. Bei Einsatz von Tageslichtleuchtfarben ist ohne Hilfsmittel der "Fingerabdruck" zu erkennen, was häufig unerwünscht ist. Bevorzugt werden deshalb Farbpigmente oder Partikel eingesetzt, die im Bereich des sichtbaren Lichtes nicht absorbieren und somit im Normalfall unsichtbar sind - erst bei Beleuchtung des Etikettes mit einer Lampe geeigneter Wellenlänge werden die Farbpigmente angeregt und leuchten charakteristisch.

Neben durch IR-Strahlung angeregten Farbpigmenten kommen hauptsächlich UV-aktive Systeme zum Einsatz. Prinzipiell geeignet sind auch Leuchtstoffe, die durch Elektronenstrahlen, Röntgenstrahlen u.ä. angeregt werden sowie thermochrome Pigmente, die sich bei Temperaturänderung reversibel umfärben - jedoch ist in diesen Fällen die Durchführung der Identifizierung am verklebten Etikett in Praxis umständlich und aufwendiger als die Sichtbarmachung mittels Licht geeigneter Wellenlänge.

Bei der Auswahl der Farbpigmente ist darauf zu achten, daß sie für den Herstellprozeß der Etiketten (Folienherstellung, Kleberbeschichtung) ausreichend stabil sind und sich nicht irreversibel bei den Prozeßbedingungen (gegebenenfalls thermische Trocknung, Elektronenstrahl- oder UV-Härtung u.ä.) verändern. Vorteilhaft für Daueranwendungen der Etiketten ist, daß diese meist empfindlichen Leuchtstoffe in einer Polymermatrix eingebettet und durch die Deckschicht zusätzlich geschützt sind. Weitergehende Maßnahmen gegen mechanischen Abrieb sowie Schutz vor direkten Sauerstoff und Wasserkontakt sind nicht notwendig.

Für die erfindungsgemäße Anwendung können unterschiedliche Farbpigmente und -stoffe zum Einsatz kommen. Am weitesten verbreitet sind langnachleuchtende (phosphoreszierende) oder fluoreszierende Pigmente, die nur oder überwiegend durch UV-Strahlung angeregt werden und im sichtbaren Bereich des Spektrums emittieren (als Übersicht siehe zum Beispiel Ullmann's Enzyklopädie der technischen Chemie, 4. Auflage, 1979, Verlag Chemie). Bekannt sind aber auch IR-aktive Leuchtpigmente. Beispiele für Systeme mit UV-Fluoreszenz sind Xanthene, Cumarine, Naphthalimide usw., die teilweise unter dem Oberbegriff "organische Leuchtstoffe" oder "optische Aufheller" in der Literatur geführt werden. Die Zugabe von einigen Prozenten der betreffenden Leuchtstoffe ist ausreichend, wobei besonders die Einbindung in eine feste Polymermatrix günstig ist in Bezug auf Leuchtkraft und Stabilität. Eingesetzt werden können beispielsweise Rezepturen mit RADGLO®-Pigmenten der Firma Radiant Color N.V./Holland oder Lumilux ® CDPigmente von Firma Riedel-de-Haen. Auch anorganische Leuchtstoffe sind geeignet; als langnachleuchtende Stoffe, besonders mit Emission von Licht im gelben Bereich, haben sich Metallsulfide und -oxide, meist in Verbindung mit. geeigneten Aktivatoren, als günstig erwiesen. Diese sind beispielsweise unter dem Handelsnamen Lumilux ® N oder als bezüglich Stabilität, Leuchtkraft und Nachleuchtdauer verbesserte Leuchtpigmente unter dem Handelsnamen LumiNova ® von Firma Nemoto/Japan erhältlich.

Diese exemplarisch aufgeführten Farbstoffe/-pigmente werden in die Rezeptur der jeweiligen Lackschicht in Mengen von 0,1 bis 50 Gew.-%, bevorzugt mit 1 bis 25 Gew.-%, ganz besonders bevorzugt zu 7 Gew.-%, eingearbeitet und beschichtet. Nach der abschließenden Kleberbeschichtung der Lackschicht und gegebenenfalls Eindeckung mit Trennpapier oder Trennfolie liegt das Etikettenvormaterial für die kundenspezifische Nutzung vor.

Nach Stanzen/Laserschneiden der gewünschten Etikettengeometrien sowie der abschließenden Beschriftung mittels Laserstrahl mit Schriftzügen, Barcodes, Logos etc. liegt das Etikett in seiner Endform vor. Bei Inkorporation von zum Beispiel langnachleuchtenden Pigmenten in die Lackschicht weist das Etikett nach entsprechender Anregung der Leuchtpigmente ein charakteristisches Nachleuchten im Bereich der Laserbeschriftung und an den Rändern auf, was eine leichte und schnelle Identifizierung als Originaletikett erlaubt. Außer der speziellen Lichtquelle und gegebenenfalls einem Sichtschutz gegen störendes Umgebungslicht ist kein weiteres aufwendiges Equipment notwendig - nach der Prüfung verbleibt das Etikett unverändert zurück.

Derartige Etiketten, die in der Lackschicht Leuchtstoffe, speziell die nur nach UV- oder IR-Anregung im sichtbaren Wellenlängenbereich emittierenden, enthalten, eignen sich auch für eine paßgenaue Fertigung (Bedrucken, Stanzen, Applizieren etc.). Anstelle von gesondert aufzubringenden Druck- oder Steuermarkierungen kann bei der Verarbeitung die Lichtemission der Lackschicht dafür genutzt werden: insbesondere nach dem Beschriften und Schneiden der Etiketten mittels Laserstrahl aus ungestanztem Rollenmaterial kann in einer nachgeschalteten Steuereinheit an einer definierten Stelle des Etiketts die Anregung und Emission mit geeignetem Equipment als Steuermarke für weitere Verarbeitungsschritte beziehungsweise für die Herstellung des nächsten Etiketts genutzt werden.

Alternativen zur Verwendung von Leuchtstoffen sind der Einbau von Substanzen in die Lackschicht, die sich magnetisch oder elektrisch detektieren lassen, sowie thermochrome Pigmente, die sich bei Temperaturänderung reversibel umfärben. Magnetfeldänderungen wie bei Alarmetiketten für zum Beispiel Kleidungsstücke sind prinzipiell möglich, jedoch für die Anwendungsfelder (Kennzeichnung von Maschinen- und Autoteilen überwiegend aus Metall) nicht prädestiniert.

Dagegen bietet sich als verdeckte Sicherheitsstufe an, in die Lackschicht Substanzen zuzugeben, die zu einer elektrischen Leitfähigkeit der Schicht führen. Mit geeigneten Meßgeräten, welche transportabel, leicht zu bedienen und preisgünstig zu beschaffen sind, und geeigneten Elektroden kann an dem verklebten Etikett direkt die Leitfähigkeit der Lackschicht ermittelt werden. Die Elektroden werden an zwei unterschiedliche Punkte A und B der Lackschicht angehalten und eine Spannung angelegt. Bei Vorhandensein einer durchgängigen elektrischen Leitfähigkeit zwischen A und B kann ein Stromfluß gemessen werden, der je nach Art und Menge des verwendeten Additivs einen charakteristischen Wert aufweisen kann. Da selbst bei Verwendung des Etikettes direkt auf Metallen die Lackschicht durch die elektrisch isolierende Klebemassenschicht von dem leitfähigem Metall getrennt ist, sind keine fehlerhaften Messungen zu befürchten

Eine Fälschung durch nachträgliche Manipulation wird besonders dadurch ausgeschlossen, daß die Leitfähigkeitsmessung nicht nur von Rand zu Rand der Etiketten, sondern zwischen beliebigen, durch Belaserung freigelegten Punkten erfolgen kann.

Damit hier eine Leitfähigkeit detektiert werden kann, muß die komplette Lackschicht durchgängig dreidimensional leitfähig sein, was sich nur im Rahmen des ursprünglichen Herstellprozesses gewährleisten läßt. Ein derartiges laserbeschriftbares Etikett läßt sich herstellen, indem in die Rezeptur der Lackschicht elektrisch leitfähige Substanzen zugegeben werden; dies kann zusätzlich zu den bisherigen Pigmenten oder aber auch zumindest teilweise im Ersatz der vorhandenen Pigmente geschehen, um die guten Verarbeitungseigenschaften der Lackpasten beizubehalten. Als leitfähige Additive sind prinzipiell elektrisch leitfähige metallische, organische, polymere und anorganische Substanzen geeignet, wobei die Verwendung von Metallen bevorzugt ist. Speziell für weiße oder helle Lackschichten ist für die Auswahl die Eigenfarbe des leitfähigen Additivs zu berücksichtigen. Leitfähiger Ruß ist ebenfalls geeignet, jedoch nur für schwarze beziehungsweise dunkle Lackschichten.

Um eine gute Leitfähigkeit zu gewährleisten, sollte eine minimale Grenzkonzentration an Additiv sichergestellt sein, so daß ausreichend Partikel in der Lackschicht vorhanden sind, um sich zu berühren und Kontakt miteinander zu haben. Bei Unterschreitung dieser Grenzkonzentration ist in dem dreidimensionalen Gefüge der Basisschicht ein leitfähiger Weg von A nach B nicht mehr sichergestellt. Bevorzugt werden deshalb metallische Partikel eingesetzt, wobei Fasern mit einem hohen Längen- zu Querschnittsverhältnis bevorzugt werden, da hierbei mit geringeren Konzentrationen eine dreidimensionale Leitfähigkeit sichergestellt werden kann als mit sphärischen Partikeln; außerdem fällt die Farbveränderung der Lackschicht mit den Fasern geringer aus. Als Metalle werden bevorzugt aus Kosten-Nutzen-Erwägungen Kupfer, Eisen, Aluminium und Stahl sowie deren Legierungen eingesetzt, jedoch sind auch teure, hochleitfähige Metalle wie Silber, Gold geeignet. Die Faserdimensionen sind 0,1 bis 50 mm Länge und Querschnitte mit 1 bis 100 µm, wobei bevorzugt Metallfasern mit einem Durchmesser von 2 bis 20 µm bei einem Querschnitts- zu Längenverhältnis von ca. 1:100 bis 1:1000 zum Einsatz kommen. Derartige Fasern werden mit 0,5 bis 25 Gew.-%, bevorzugt mit 2 bis 10 Gew.-% in die bekannte Rezeptur homogen eingearbeitet und gemäß DE G 81 30 861 beschichtet und ausgehärtet.

Nach Kleberbeschichtung und Eindeckung mit Trennpapier steht Etikettenmaterial zur Verfügung, welches sich mittels Laserstrahl beschriften läßt. Durch das Entfernen der oberen Lackschicht werden im Bereich der Laserbeschriftung die Schriftzüge der Lackschicht freigelegt - bei Anlegen einer Spannung über geeignete Elektrodenkontakte an zwei unterschiedlichen Stellen A und B dieser Schriftzüge wird ein Leitfähigkeit gemessen, die charakteristisch für die Lackschicht ist und unter anderem durch Menge und Art des leitfähigen Additivs bestimmt wird. Somit besteht die Möglichkeit, über definierte Rezepturen kundenspezifisches Etikettenvormaterial herzustellen.

Diese zusätzliche Markierung ist von der Vorderseite im Bereich der Laserbeschriftung nicht zu erkennen (außer bei einer transparenten oder transluzenten Schicht), sondern nur rund um das Etikett am Rand. Um eine deutliche Erkennbarkeit am Etikettenrand zu gewährleisten, werden stark leuchtende Farbpigmente in ausreichender Schichtdicke gedruckt. Trotzdem ist die Zusatzsicherung verdeckt und damit unauffällig. Diese Sicherheitskennzeichnung ist dem äußerem Zugriff gegenüber geschützt, da der Druck eingebettet zwischen der Etikettenfolie und der Kleberschicht liegt: nachträgliche Manipulationen sind nicht zu befürchten, da eine Ablösung der bekannten Laseretiketten nur unter Zerstörung der Lackfolie möglich ist.

Kundenspezifische "Fingerabdrücke" der Etiketten lassen sich realisieren, indem unterschiedliche Farben oder Muster aufgedruckt werden. Besonders regelmäßige Linien und Strichmuster lassen an den Etikettenrändern charakteristische Muster von Leuchtpunkten entstehen und sind zudem besonders material- und kostensparend. Nach der Stanzung oder dem Laserschneiden des Etikettes und der Applizierung auf den Haftuntergründen ist bei Wahl einer geeigneten Beleuchtungsquelle am Rand des Etikettes ein bezüglich Farben und Geometrien charakteristisches Muster zu erkennen.

Besonders logistisch und kostenmäßig macht sich der Vorteil dieser Sicherheitskennzeichnung bemerkbar. Es kann auf käufliche Druckfarben und unspezifisches Etikettenfolienmaterial zurückgegriffen werden, während letzteres ansonsten kundenspezifisch herzustellen ist. Da derartiges Standardvormaterial jedoch bei den Etikettenherstellern nur als Zwischenprodukt selbst für die eigene Fertigung genutzt wird und am Markt nicht frei verfügbar ist, ist ein unbefugter Zugriff ausgeschlossen. Außerdem sind kleine Losgrößen und kurze Lieferzeiten möglich.

In einer erfindungsgemäßen Ausprägung des Etiketts wird zum Beispiel auf das in DE G 81 30 861 beschriebene Zweischicht-Folienmaterial zurückgegriffen. Vor der Beschichtung und Eindeckung mit Trennpapier wird die Rückseite vollflächig, im Streudruck oder insbesondere mit definierten Geometrien bedruckt. Druckfarben mit einem hohem Anteil an Leuchtpigmenten werden bevorzugt im Siebdruck aufgebracht, um Schichtdicken im Bereich von 0,5 bis 50 µm, bevorzugt 2 bis 25 µm zu erzielen.

Nach der Kleberbeschichtung und Eindeckung wird das Etikettenvormaterial für die gewünschten Formate und Größen gestanzt oder per Laserstrahl ausgeschnitten. An diesen Etiketten ist im verklebtem Zustand kein Hinweis auf eine versteckte Fälschungsstufe zu erkennen, sofern Leuchtstoffe gewählt werden, deren Lichtemission durch Anregung mit Licht außerhalb des sichtbaren Bereiches erzeugt wird; erst nach Bestrahlung mit geeigneten Lichtquellen findet eine Anregung der Leuchtpigmente an den Kanten des Etiketts statt. Hier und nur hier sind deshalb visuell Markierungen zu erkennen, die ein vorbestimmtes Muster an Leuchtpunkten ergeben. Durch unterschiedliche Strichbreiten und -höhen lassen sich die Leuchtpunkte unterschiedlich groß gestalten. Somit läßt sich einfach, kostengünstig und bei Bedarf kundenspezifisch über Geometrie- und Farbenauswahl eine leicht detektierbare Sicherheitsstufe realisieren.

Weiter bevorzugt ist eine Ausführungsform des Etiketts, das aus zumindest einer Lackschicht besteht, erhältlich dadurch, daß auf einer bedruckten oder geprägten Stützträgerfolie die Lackschicht bevorzugterweise lösungsmittelfrei aufgetragen und anschließend ausgehärtet wird. Darüber hinaus kann auf der Lackschicht ein Hologramm aufgebracht sein.

Als vorteilhaft hat es sich erwiesen, wenn die Lackschicht selbsttragend und deckend pigmentiert ist sowie wenn die Lackschicht elektronenstrahlgehärtet wird.

Weiterhin hat es sich als vorteilhaft erwiesen, wenn die Stützträgerfolie eine Kunststoffolie ist, insbesondere aus Polyester.

Die Bedruckung der Stützträgerfolie erfolgt insbesondere nach dem Flexodruckverfahren, denn das UV-Flexodruckverfahren besitzt bezüglich der Gestaltung von Geometrien einen sehr hohen Freiheitsgrad und kann besonders für bahnförmige Materialien von Papier bis zur Folie bei möglichst niedrigen Preis eine gute Druckqualität erbringen. Bei dieser Technologie ist es möglich, Linien Felder, Bilder, Logos, Schriften usw. in unterschiedlicher Größe und Art vom Klischee auf das Drucksubstrat zu übertragen.

Hierbei sind die wichtigsten Einflußfaktoren für diesen Prozeß:
- Druckvorstufe (reprotechnisch Ausarbeitung des Druckklischees)
- Druckplatte
- Druckformataufbau
- Bedruckstoff
- Rasterwalze
- Druckfarbe
- Farbgebung
- Druckspannung

In der oben beschriebenen Anwendung des fälschungssicheren, laserbeschriftbaren Etiketts werden vorzugsweise Logos und Schriften mit unterschiedlicher Komplexität von Automobilherstellern gefordert werden; hierbei ist das UV-Flexodruckverfahren gut einsetzbar.

Dazu wird ein mit den Logos und Schriften versehenes Klischee mit Druckfarbe benetzt und diese auf eine Kunststoffolie übergeben. Die Druckfarbe kann dann durch physikalische Aktivierung (thermisch, strahlenchemisch) auf der Folie ausgehärtet werden. Hierzu soll die Farbe eine hohe Verbundhaftung zum Foliensubstrat eingehen; dies ist für die weitere Verarbeitung unabdingbar. Eine Druckverankerung ist vor der Weiterverarbeitung zu prüfen. Dazu nutzt man den Gitterschnittest (DIN EN ISO 2409). Der Druck soll bei dem Gitterschnittest mindestens eine Bewertung von Gt 02 erreichen.

Zur Erreichung einer hohen Verbundhaftung/Druckverankerung ist eine entsprechende Auswahl beziehungsweise Rezeptierung der Druckfarbe in Abhängigkeit des Folienwerkstoffes und/oder der Einsatz eines Vorbehandlungsverfahrens für die Druckfolie notwendig. Vorzugsweise kann hier die Coronabehandlung gewählt werden, die Inline bei der Bedruckung eingesetzt werden kann. Bei Verwendung einer PET-Folie sollte die Oberflächenspannung auf > 50 mN/m eingestellt werden. Dies kann mit üblichen Teststinten gemessen werden.

Die UV-Härtung sollte je nach UV-Strahler eine prozentuale Leistungseinstellung zwischen 50% bis 100% besitzen, um eine ausreichende Flexibilität des Druckes für die weiterverarbeitenden Prozesse zu gewährleisten.

Um später auf dem Laseretikett ein sichtbares und sensorisch fühlbares Abformergebnis zu erreichen, sollte die Bedruckung eine Höhe von 0,1 µm bis 15 µm besitzen. Vorzugsweise ist eine Höhe von 1 bis 5 µm zu wählen. Auch kann die Druckanmutung und-ausprägung durch den Verlauf der Druckpunkte variiert werden.

Zur Realisierung der Erfindung können auch die weiteren konventionellen Druckverfahren eingesetzt werden, die als Hochdruckverfahren bekannt sind. Hierzu zählen Buch- und Siebdruck.

Die Stützträgerfolie kann mit unterschiedlichsten Motiven bedruckt werden, zum Beispiel Firmenlogos oder Werbung. Durch die Bedruckung der Stützträgerfolie entsteht ein Negativabdruck auf der sichtbaren Oberfläche der ersten Lackschicht des erfindungsgemäßen Etiketts.

Besonders bevorzugt ist, wenn in der ersten Lackschicht die Abformung der bedruckten Stützträgerfolie als Vertiefung von 0,1 bis 15 µm, vorzugsweise von 1 bis 5 µm vorliegt.

Die Herstellung des erfindungsgemäßen Etiketts kann auf einer geprägten Stützträgerfolie erfolgen, zum Beispiel auf einer Polyesterfolie von bevorzugt 25 bis 100 µm Stärke, insbesondere 50 µm.

Die Prägung der Stützträgerfolie kann zum Beispiel mit einem Prägeblech (erhältlich bei der Firma Gerhardt) in unterschiedlicher Stärke beziehungsweise Tiefe vorgenommen werden. Die Prägetiefe ist abhängig von dem eingestellten Prägedruck, der auf den im Prägeverfahren zum Einsatz kommenden Magnetzylinder wirkt und der Art des Gegendruckzylinders. Eine Ummantelung des Gegendruckzylinder (zum Beispiel mit tesaprint ® oder mit einer Polyesterfolie) bewirkt eine starke Prägung.

Des weiteren kann das eingesetzte Prägewerkzeug holographische Strukturen aufweisen, so daß sich auf der Lackschicht die Struktur abbildet und zumindest ein Hologramm ergibt.

Die dem Prägegut zugewandte Seite des Prägewerkzeugs ist also so geformt, daß eine Struktur entsteht, welche ein Beugungsgitter beziehungsweise eine holographische Abbildung enthält.

Da das Hologramm in der Lackschicht selbst erzeugt wird, ist ein schädlicher Mehrschichtaufbau nicht gegeben, und das so erzeugte Beugungsgitter besitzt die gleiche Beständigkeit und Belaserbarkeit wie die Lackschicht selbst.

In einer vorteilhaften Ausführungsform besteht die Stützträgerfolie aus einem duroplastischen oder thermoplastischen Material, das dauerhaft geprägt ist, und zwar insbesondere aus Polyester oder Polyamid.

Im Verfahren zur Herstellung eines solchen Etiketts wird auf die Stützträgerfolie die Lackschicht aufgetragen und durch Einwirkung eines Elektronenstrahls mit hoher Energie (150 bis 500 kV) unter effektiv sauerstofffreien Bedingungen gehärtet. Zur Verbesserung der Haftung zwischen den bevorzugt vorhandenen beiden Lackschichten kann durch besonders niedrige Dosis oder durch etwas Sauerstoff eine leicht klebende Oberfläche eingestellt werden.

Auf diese erste Schicht wird die zweite aufgebracht und ebenfalls durch Elektronenstrahl gehärtet. Darauf erfolgt gegebenenfalls die Beschichtung mit dem Klebstoff und anschließend, wenn erwünscht, die Abdeckung mit dem Schutzpapier. Danach wird die Polyesterfolie abgezogen, so daß die freie Oberfläche der ersten, oberen Schicht zum Vorschein kommt. Je nach Gestalt der Oberfläche der Polyesterfolie ist diese glänzend, glatt, matt oder geprägt.

In einer weiteren vorteilhaften Ausführungsform ist in der Trägerschicht ein Identifikationsmedium enthalten.

Mit Hilfe eines berührungslosen Beschriftungsprozesses können die Diffusionseigenschaften dieses Identifikationsmediums gezielt selektiv und lokal verändert werden. Wird die so beschriftete Trägerfolie auf ein Werkstück aufgeklebt, so diffundiert das Identifikationsmedium zur Substratoberfläche hin und bewirkt dort eine nachweisbare Reaktion. Dabei erfolgt diese Diffusion beziehungsweise Reaktion nur in solchen Bereichen der Substratoberfläche, in denen durch den Beschriftungsvorgang die Diffusionsfähigkeit ausgelöst beziehungsweise nicht behindert wurde. Somit ermöglicht die Trägerschicht eine eindeutige Beschriftung und Identifikation des Werkstücks.

Die Trägerschicht wird mittels eines berührungslosen Verfahrens beschriftet. So kann auch im Fabrikumfeld eine schmutzunempfindliche, schnelle, flexibel variierbare Beschriftung erreicht werden. Die Beschriftung der Trägerschicht - und somit die Änderung der Diffusionseigenschaften des Identifikationsmediums - kann insbesondere mit Hilfe elektromagnetischer Strahlung erfolgen.

Besonders vorteilhaft zur Beschriftung der Trägerschicht ist der Einsatz eines Lasers, mit Hilfe dessen sowohl eine temperatur- als auch eine lichtsensitive Beschriftung erfolgen kann (wobei der Begriff "Licht" in diesem Fall den gesamten dem Laser zugänglichen Bereich des elektromagnetischen Spektrums umfaßt). Laser haben den zusätzlichen Vorteil, kontrastreiche Beschriftungen mit einer beliebigen Wahl des Musters zu ermöglichen, schnelle Änderungen des Beschriftungsmusters zu gestatten und prozeßsicher im Fabrikumfeld einsetzbar zu sein.

Als Identifikationsmedium wird ein Stoff gewählt, der auf dem Substrat eine nachweisbare Reaktion auslöst. Hierzu muß das Identifikationsmedium den Werkstoffeigenschaften des Substrats angepaßt werden. So kann das Identifikationsmedium einen - auf das Substrat abgestimmten - Farbstoff enthalten, der lokal in die Substratoberfläche eindiffundiert und diese einfärbt. Alternativ kann das Identifikationsmedium einen Stoff enthalten, der mit der Substratoberfläche eine chemische Reaktion eingeht. Von besonderem Interesse sind hierbei Reaktionen, bei denen die Substratoberfläche lokal abgetragen oder lokal aufgebläht wird, so daß die Beschriftung des Substrats nach Entfernen der Folie optisch oder auch taktil nachgewiesen werden kann. Für die Markierung metallischer Substrate empfiehlt sich insbesondere ein Identifikationsmedium, das eine ätzende Substanz enthält.

Zur Erhöhung des Diebstahlschutzes kann es ratsam sein, ein Identifikationsmedium zu wählen, dessen Einfluß auf das darunterliegende Substrat nicht mit dem bloßen Auge erkennbar ist. Dies kann mit einem Identifikationsmedium erreicht werden, das die Absorptions- und Reflexionseigenschaften des Substrats z. B. nur im UV- oder IR-Bereich, nicht aber im sichtbaren Bereich beeinflußt.

Das Substrat enthält keine sichtbaren Spuren der Markierung. Die betroffenen Bereiche enthalten dabei nach wie vor die Markierung, die von informierten Sicherheitskräften einfach mit Hilfe z. B. eines UV- oder IR-Sichtgerätes nachgewiesen werden kann. Insbesondere kann das Identifikationsmedium so gewählt werden, daß die Nachweisbarkeit, z. B. die UV-Fluoreszenz, nur bei bestimmten Wellenlängen des prüfenden Lichtes erfolgt.

Für einen industriellen Einsatz der Trägerschicht, insbesondere in der Automobilindustrie, muß die Folie eine hohe Robustheit gegenüber Temperatur- und Lichteinflüssen aufweisen. Diese Anforderungen können am besten erfüllt werden, wenn die Sicherheitsfolie physikalische Barrieren aufweist, die im unbeschriebenen Zustand der Trägerschicht die Diffusion des Identifikationsmedium hemmen.

Während des Beschriftungsvorgangs werden diese Barrieren lokal zerstört beziehungsweise geschwächt, so daß in den so geschwächten Bereichen eine selektive Diffusion des Identifikationsmediums stattfinden kann. Um eine hohe Temperatur- beziehungsweise Lichtbeständigkeit der Beschriftung zu erreichen, müssen die zur Zerstörung der Barrieren erforderlichen Temperaturen beziehungsweise Lichtintensitäten wesentlich hoher liegen als diejenigen, denen das zu markierende Objekt im Gebrauchszustand - auch unter extremen Umgebungsbedingungen - unterliegt.

Eine solche Diffusionshemmung des Identifikationsmediums, die durch eine berührungslose Beschriftung aufhebbar ist, kann vorteilhaft durch eine Mikro-Verkapselung des Identifikationsmediums in der Trägerschicht realisiert werden. Das Identifikationsmedium ist in Kapseln eingeschlossen, deren Wandungen z. B. aus Wachs und/oder Fett bestehen und z. B. durch den lokalen Einfluß von Wärme in den betroffenen Bereichen der Folie aufgebrochen werden können, so daß das darin enthaltene Identifikationsmedium entweichen und - beim Kontakt mit dem Substrat - in dieses hineindiffundieren beziehungsweise mit ihm reagieren kann.

Eine besonders hohe Temperaturbeständigkeit der Beschriftung läßt sich erreichen, wenn die Barriere durch eine Barriereschicht gebildet wird, die flächig zwischen Trägerschicht und einer Klebeschicht angeordnet ist und die im unbeschrifteten Zustand der Folie die Diffusion des Identifikationsmediums aus der Trägerschicht heraus verhindert. Durch eine Beschriftung der Trägerschicht wird die Barriereschicht lokal durchbrochen, so daß das Identifikationsmedium an diesen Durchbruchsstellen lokal aus der Trägerschicht heraus entweichen und in die Klebeschicht hineindiffundieren kann.

Die bei der Beschriftung unversehrt gebliebenen Bereiche der Barriereschicht verhindern wirksam die Diffusion des Identifikationsmediums und somit eine Reaktion in diesen nichtbeschrifteten Bereichen.

Es ist einerseits möglich, daß die Trägerschicht eine Art Matrix darstellt, in die das Identifikationsmedium eingebettet ist. Alternativ kann der Stoff der Trägerschicht selbst das Identifikationsmedium darstellen, so daß die Trägerschicht aus Identifikationsmedium besteht.

Der durch Hitze aktivierbare Reaktivkleber umfaßt vorzugsweise
i) ein thermoplastisches Polymer mit einem Anteil von 30 bis 90 Gew.-%, insbesondere 50 Gew.-%,
ii) ein oder mehrere klebrigmachende Harze mit einem Anteil von 10 bis 70 Gew.-%, insbesondere 50 Gew.-%, wobei es sich bei den Harzen insbesondere um Epoxidharze mit Härtern, gegebenenfalls auch Beschleunigern, und/oder Phenolharze handelt,
iii) gegebenenfalls versilberte Glaskugeln,
iv) gegebenenfalls metallisierte Partikel,
v) gegebenenfalls nur schwer oder nicht verformbare Spacerpartikel, die bei der Reaktivierungstemperatur nicht schmelzen.

Der Reaktivkleber ist eine Mischung von reaktiven Harzen, die bei Raumtemperatur vernetzen und ein dreidimensionales, hochfestes Polymernetzwerk bilden, und von dauerelastischen Elastomeren, die einer Versprödung des Produktes entgegenwirken und somit dauerhafte Belastungen (Stauchungen, Dehnungen) des Produktes ermöglichen.

Das Elastomer stammt bevorzugt aus der Gruppe der Polyolefine, Polyester, Polyurethane oder Polyamide oder kann ein modifizierter Kautschuk sein wie zum Beispiel Nitrilkautschuk oder auch Polyvinylbutyral, Polyvinylformal, Polyvinylacetat, carboxyliertes oder epoxyliertes SEBS-Polymer.

Ganz besonders bevorzugt kommt dabei Nitrilkautschuk zum Einsatz.

Die bevorzugten thermoplastischen Polyurethane (TPU) sind als Reaktionsprodukte aus Polyester- oder Polyetherpolyolen und organischen Diisocyananten wie Diphenylmethandiisocyanat bekannt. Sie sind aus überwiegend linearen Makromolekülen aufgebaut. Solche Produkte sind zumeist in Form elastischer Granulate im Handel erhältlich, zum Beispiel von der Bayer AG unter dem Handelsnamen "Desmocoll".

Durch Kombination von TPU mit ausgewählten verträglichen Harzen kann die Erweichungstemperatur ausreichend gesenkt werden. Parallel dazu tritt sogar eine Erhöhung der Adhäsion auf. Als geeignete Harze haben sich beispielsweise bestimmte Kolophonium-, Kohlenwasserstoff- und Cumaronharze erwiesen.

Alternativ dazu kann die Reduzierung der Erweichungstemperatur durch die Kombination von TPU mit ausgewählten Epoxidharzen auf der Basis von Bisphenol A und/oder F und einem latenten Härter erreicht werden.

Durch die chemische Vernetzungsreaktion (auf Basis von Epoxiden oder Phenolharzkondensation) der Harze bei erhöhter Temperatur werden große Festigkeiten zwischen dem Reaktivkleber und der zu verklebenden Oberfläche erzielt.

Die Zugabe der reaktiven Harz/Härtersystemen führt auch zu einer Erniedrigung der Erweichungstemperatur der oben genannten Polymere, was ihre Verarbeitungstemperatur und -geschwindigkeit vorteilhaft senkt. Der Reaktivkleber ist ein bei Raumtemperatur oder leicht erhöhten Temperaturen selbsthaftendes Produkt. Beim Erhitzen des Produktes kommt es kurzfristig auch zu einer Erniedrigung der Viskosität wodurch das Produkt auch rauhe Oberflächen benetzen kann.

Die Zusammensetzungen des Reaktivklebers lassen sich durch Veränderung von Rohstoffart und -anteil in weitem Rahmen variieren. Ebenso können weitere Produkteigenschaften wie beispielsweise Farbe, thermische oder elektrische Leitfähigkeit durch gezielte Zusätze von Farbstoffen, mineralischen bzw. organischen Füllstoffen, beispielsweise Siliziumdioxid, und/oder Kohlenstoff- bzw. Metallpulvern erzielt werden.

Die in dem Reaktivkleber und/oder dem Haft- beziehungsweise Heißkleber gegebenenfalls enthaltenen Kugeln und/oder weichen leitfähigen Partikel ermöglichen eine Leitfähigkeit in z-Richtung, möglich ist auch in der x-y-Ebene.

Besonders vorteilhaft ist deshalb die Verwendung von weichen oder elastischen, sphärischen, metallisierten Partikeln, deren Kern aus Metall oder Kunststoff besteht und die sich an die Dicke der Klebemasseschicht nach der Verpressung anpassen können, da der Kern sich bei den Verklebungstemperaturen verformen läßt. Diese Partikel können Metallkugeln - zum Beispiel aus Gold, Nickel, Silber -, versilberte Metallkugeln oder vorzugsweise metallisierte beziehungsweise metallbeschichtete Polymer- oder Elastomerkugeln - wie Kunststoffkugeln, Styroporkugeln - sein, wobei die Beschichtung mit einem gut leitfähigem Metall (Gold, Silber, Kupfer, Nickel) erfolgt. Des weiteren können die Metall- oder Kunststoffkugeln mit leitfähigem Polymer beschichtet sein.

Um eine zu starke Deformation zu verhindern, ist es möglich, dem Reaktivkleber und/oder dem Haft- beziehungsweise Heißkleber Spacerpartikel beizumischen. Die Spacerpartikel sind von sphärischer Geometrie und bestehen aus einem harten Material, das bei der erhöhten Verklebungstemperatur nicht schmilzt und nur schwer oder nicht verformbar ist. Die Spacerpartikel können ebenfalls leitfähig sein, sie sollten jedoch härter sein als die metallisierten Partikel.

Bei dem Haftkleber und/oder Heißkleber handelt es sich beispielsweise um einen Haftkleber, wie er in der DE 15 69 898 C offenbart ist.

Beispielsweise wird eine Acrylatklebmasse mit 25 bis 35 g/m² Masse aufgetragen.

Durch die erfindungsgemäß ausgestaltete Klebeschicht kommt es zu keiner Beeinträchtigung des Etiketts. Die physikalische und chemische Widerstandsfähigkeit werden nicht verändert.
Aus der Anwendungssicht erfährt das Etikett keine Einbußen bezüglich Beschriftbarkeit mit einem Laser, Lesbarkeit der Informationen.

Das erfindungsgemäße Etikett zeichnet sich durch eine Vielzahl von Vorteilen aus, die derartig für den Fachmann nicht vorhersehbar waren.
- Die Etiketten sind nach dem Applizieren schnell zu erkennen, sie sind optisch sichtbar und fühlbar.
- Die Identifikation ist ohne Hilfsmittel möglich, d.h., eine Authentizitätsprüfung kann ohne UV-, IR-Lampen etc. vorgenommen werden.
- Da die Identifikation eindeutig ist, ist die Gefahr einer Fehlbeurteilung gering.
- Das Etikett ist nur unter Zerstörung desselben vom Untergrund ablösbar.
- Nach der Aktivierung des Reaktivklebvers sind die Hafteigenschaften wesentlich verbessert.

Ohne den Einsatz geeigneter Hilfsmittel ist zerstörungsfreies Ablösen der Etiketten, insbesondere Laseretiketten, aufgrund der hohen Sprödigkeit nicht möglich.

Ein zerstörungsfreies Ablösen ist insbesondere durch die streifenförmige Anordnung des Reaktivklebers in der Klebeschicht unmöglich gemacht. Der Reaktivkleber bildet ein Hindernis, das die Klinge daran hindert, die unteren Schichten der Klebmasse zu durchtrennen.

Anhand der nachfolgend beschriebenen Figuren wird eine besonders vorteilhafte Ausführung der Erfindung näher erläutert, ohne damit diese unnötig einschränken zu wollen. Es zeigen
- Figur 1: das Etikett mit dem mittels Hitze aktivierbaren Reaktivkleber, wobei sich dieser in einer Mischung mit einem druckempfindlichen Haftkleber befindet,
- Figur 2: das Etikett mit dem mittels Hitze aktivierbaren Reaktivkleber, wobei dieser in Streifenform auf einer Lackschicht angeordnet ist,
- Figur 3: das Etikett mit dem mittels Hitze aktivierbaren Reaktivkleber, wobei dieser in Streifenform auf dem druckempfindlichen Kleber angeordnet ist,
- Figur 4: das Etikett mit dem mittels Hitze aktivierbaren Reaktivkleber, wobei der druckempfindliche Haftkleber und der durch Hitze aktivierbare Reaktivkleber in Streifen oder Punkten angeordnet sind.

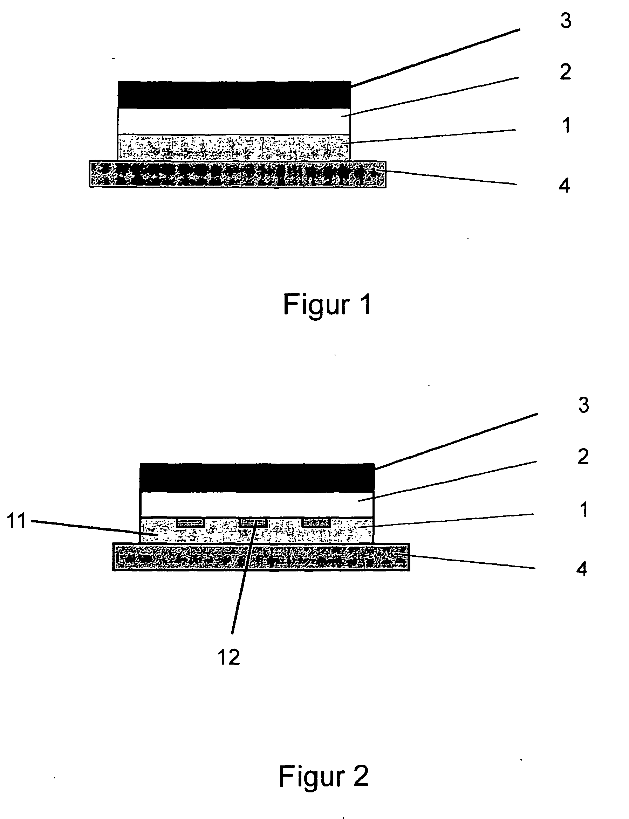

In der Figur 1 ist der Aufbau eines erfindungsgemäßen Etiketts dargestellt, und das Etikett mit dem mittels Hitze aktivierbaren Reaktivkleber, wobei sich dieser in einer Mischung mit einem druckempfindlichen Haftkleber befindet.

In dem Etikett befindet sich die zweite Lackschicht 3 auf der dickeren Lackschicht 2, und diese auf einer Schicht eines Klebers 1, der auf dem Substrat 4 verklebt ist.

Die Klebeschicht 1 setzt sich aus einer Mischung aus einem druckempfindlichen Haftkleber und dem mittels Hitze aktivierbaren Kleber zusammen.

Die Figur 2 unterscheidet sich von der Figur 1 nur insofern, als daß die Klebeschicht 1 einen anderen Aufbau hat.

Die Klebeschicht 1 wird im wesentlichen vom druckempfindlichen Kleber 11 gebildet, auf dem drei Streifen des Reaktivklebers 12 aufgebracht sind. Der Reaktivkleber 12 befindet sich also zwischen der Lackschicht 2 und dem druckempfindlichen Kleber 12.

Versucht man das Etikett mittels eines Messers, das einen sehr schmalen Rücken aufweist, vom Untergrund zu lösen, fährt das Messer zunächst in die Schicht des druckempfindlichen Klebers 11. Am ersten der drei Streifen des Reaktivklebers 12 bleibt die Schneide des Messers. Erhöht man den Druck, um das Messer weiterzuführen, wird über den Streifen ein Druck auf die darüber liegende Lackschicht 2 ausgeübt, der leicht zum Spalten der Lackschicht 2 führt. Das Etikett ist beschädigt und somit nicht mehr vom Untergrund abzulösen, ohne daß die Beschädigung auffällt.

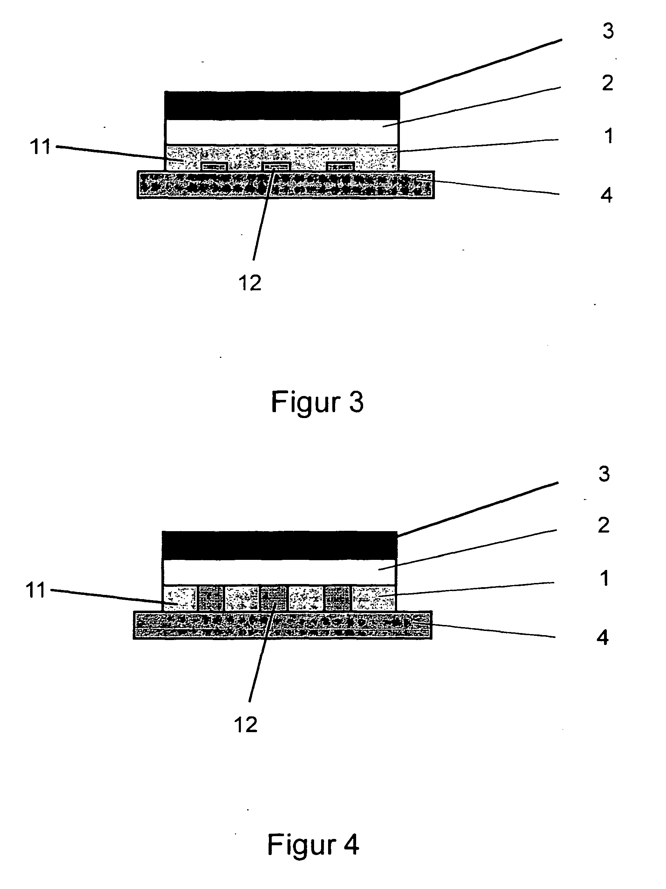

In der Figur 3 wird die Klebeschicht 1 hergestellt, indem der Reaktivkleber 12 streifenförmig auf den druckempfindlichen Haftkleber 11 aufgedruckt oder laminiert wird. Der Reaktivkleber 12 steht somit im direkten Kontakt mit dem Substrat 4.

Die Figur 4 zeichnet sich dadurch aus, daß hier Reaktivkleber 12 und druckempfindlicher Haftkleber 11 in Streifen abwechselnd auf der Lackschicht 2 angeordnet sind. Ein mögliches Herstellungsverfahren der Streifen ist der Druck oder die Laminierung.

Vor der Hitzeaktivierung zeigen die eingebrachten Streifen oder Punkte keine permanente Klebrigkeit, so daß die Klebeigenschaften etwas schlechter sind als bei einem herkömmlichen Etikett.

Nach der Aktivierung des Reaktivklebers sind die Haftkräfte dagegen wesentlich erhöht, so daß ein Ablösen des Etiketts nicht möglich ist.

### Beispiel

Im folgenden Beispiel soll ein besonders vorteilhaftes Etikett offenbart werden, das unter Verwendung einer bedruckten Stützträgerfolie hergestellt wird, so daß sich auf der Etikettoberfläche Einprägungen ergeben, die einen weiteren hohen Sicherheitsfaktor zur Folge haben.

Die zu bedruckende Stützträgerfolie, hier eine Polyesterfolie (Hostaphan RN 75®) der Firma Mitsubishi, wird vor der Bedruckung entsprechend durch eine Coronabehandlung auf die gewünschte Oberflächenspannung behandelt. Dazu kann eine Coronastation VETAPHON-Corona-Plus DK - E-Treater ET 2 - mit einer Leistung von 0,2 bis 2,0 kW eingesetzt werden. Vorteilhaft für die Weiterverarbeitung ist die Einstellung der Oberflächenspannung auf > 50 mN/m.

Zum Einsatz kommt ein kationisch-aushärtbarer UV-Lack SICPA 360076 von der Firma SICPA, Aarberg, der blau angetönt wird. Durch Beimischung von 5 Gew.-% Zylinderabstoßmittel wird die Druckfarbe für die Verarbeitung optimiert.

Mittels einer UV-Flexodruckmaschine ARSOMA em 410 oder em 510 wird die vorbehandelte Polyesterfolie bei einer Maschinengeschwindigkeit von 30 m/min über eine Flexodruckstation bedruckt. Die genau definierte Farbübertragung auf das Flexodruckklischee gelingt mittels einer entsprechenden Rasterwalze im Negativrakelverfahren. Es erfolgt danach die Farbübertragung vom Klischee auf des Foliensubstrat in einer Farbhöhe von 3 bis 4 µm. Der Farbauftrag auf dem Foliensubstrat wird durch leistungsstarke UV-Strahlerröhren ausgehärtet. Hierfür wird eine UV-Station Micro UV-Station GEW mit einer Strahlerleistung von 110 W/cm und einer Wellenlänge von 365 nm eingesetzt. Die Stützträgerfolie ist jetzt für die Weiterverarbeitung vorbereitet.

Dann wird ein handelsübliches Polyurethanacrylat aus langkettigem Polyesterdiol, aliphatischem Diisocyanat und endständigen Acrylgruppen (Molekulargewicht ca. 1500, Funktionalität 2) mit 20% Hexandiolbisacrylat vermischt. Man erhält eine hochviskose Flüssigkeit von etwa 10 Pa*s.
Aus dieser wird hergestellt:
- Eine Schwarzpaste A durch Anreiben mit 12% Ruß FCF (mittlerer Teilchendurchmesser 23 µm) am Dreiwalzenstuhl und
- eine Weißpaste B durch Anreiben mit 45% eines Al und Si stabilisierten Rutilpigments (TiO₂-Gehalt 90%, Dichte 3,9 g/cm³).

Paste A wird in einer Stärke von 10 µm auf eine 50 µm starke biaxial gereckte und geprägte Polyesterfolie gestrichen und durch einen Elektronenstrahl von 350 keV mit einer Dosis von 1 Mrad unter Inertgas gehärtet.

Darauf wird eine Weißpaste B mit einer Stärke von 50 µm aufgetragen und erneut mit dem Elektronenstrahl unter Inertgas mit einer Dosis von 3 Mrad gehärtet.

Auf dieses Produkt wird ein Haftkleber entsprechend der DE 15 69 898 A1 gestrichen, so daß die Schicht nach dem Trocknen eine Stärke von 20 µm aufweist. Der Haftkleber wird mit handelsüblichem Trennpapier abgedeckt.

Danach wird die Polyesterfolie abgezogen, so daß die mit den Einprägungen versehene und ansonsten spiegelglatte schwarze Oberfläche des Produktes zum Vorschein kommt.

Diese ist mit einem steuerbaren Leistungslaser zum Beispiel mit einem Balkencode schnell beschriftbar. Der Kontrast ist so hoch, daß der Code über 1 m Entfernung mit Auswerte-Gerät fehlerfrei zu lesen ist.

Ein Erhitzen des Materials für 1 Stunde auf 200 °C führt zu Schrumpf von unter 10% in Längs- und Querrichtung. Eintauchen in Wasser und/oder Bewitterung im Weatherometer für 500 h führt zu keiner Beeinträchtigung.

## Patentansprüche

1. Etikett mit erhöhter Fälschungssicherheit aus zumindest einer Trägerschicht (2), wobei auf der unteren Seite der Trägerschicht eine Klebeschicht (1) vorhanden ist, **dadurch gekennzeichnet, daß** sich die Klebeschicht (1) aus einem Haftkleber und/oder Heißkleber und einem durch Hitze aktivierbaren Reaktivkleber zusammensetzt.

2. Etikett nach Anspruch 1, **dadurch gekennzeichnet, daß** in der Klebeschicht (1) der Haftkleber und/oder Heißkleber mit dem durch Hitze aktivierbaren Reaktivkleber vermischt sind.

3. Etikett nach den Ansprüchen 1 und 2, **dadurch gekennzeichnet, daß** in der Klebeschicht (1) der Haftkleber und/oder Heißkleber und der durch Hitze aktivierbare Reaktivkleber partiell in Streifen oder Punkten angeordnet sind

4. Etikett nach den Ansprüchen 1 bis 3, **dadurch gekennzeichnet, daß** in der Klebeschicht (1) der durch Hitze aktivierbare Reaktivkleber auf den Haftkleber und/oder Heißkleber partiell in Streifen oder Punkten auflaminiert oder aufgedruckt ist.

5. Etikett nach den Ansprüchen 1 bis 3, **dadurch gekennzeichnet, daß** in der Klebeschicht (1) der durch Hitze aktivierbare Reaktivkleber partiell in Streifen oder Punkten auf die Träger- insbesondere Laserlackschicht (2) auflaminiert oder aufgedruckt ist, wobei der Haftkleber und/oder Heißkleber auf die modifizierte Trägerschicht beschichtet ist.

6. Etikett nach den Ansprüchen 1 bis 5, **dadurch gekennzeichnet, daß** die Trägerschicht (2) aus einem Lack, insbesondere aus einem gehärteten Lack, vorzugsweise einem strahlengehärteten Lack, besonders vorzugsweise aus einem elektronenstrahlengehärteten Polyurethanacrylat-Lack besteht.

7. Etikett nach Anspruch 6, **dadurch gekennzeichnet, daß** auf der Lackschicht eine zweite Lackschicht (3) aufgetragen wird, die anschließend ausgehärtet wird.

8. Etikett nach den Ansprüchen 6 und 7, **dadurch gekennzeichnet, daß** die zweite Lackschicht (3) eine Stärke von 1 bis 20 µm, insbesondere 5 bis 15 µm, aufweist und die Lackschicht (2) eine Stärke von 20 bis 500 µm, insbesondere 30 bis 100 µm.

9. Etikett nach den Ansprüchen 6 bis 8, **dadurch gekennzeichnet, daß** beide Lackschichten (2, 3) gegeneinander maximalen Farbkontrast aufweisen.

10. Verwendung eines Etiketts nach zumindest einem der vorherigen Ansprüche im Automobilbau.

## Claims

1. Label with enhanced proof against counterfeiting, comprising at least one carrier layer (2) with an adhesive layer (1) on its underside, charcterized in that the adhesive layer (1) is composed of a pressure sensitive and/or hotmelt adhesive and a heat-activatable (reactive) adhesive.

2. Label according to Claim 1, charcterized in that, in the adhesive layer (1), the pressure sensitive and/or hotmelt adhesive is in the form of a mixture with the heat-activatable adhesive.

3. Label according to Claim 1 or 2, charcterized in that, in the adhesive layer (1), the pressure sensitive and/or hotmelt adhesive and the heat-activatable adhesive are arranged partially in stripes or dots.

4. Label according to any of Claims 1 to 3, charcterized in that, in the adhesive layer (1), the heat-activatable adhesive is laminated or printed on the pressure sensitive and/or hotmelt adhesive partially in stripes or dots.

5. Label according to any of Claims 1 to 3, charcterized in that, in the adhesive layer (1), the heat-activatable adhesive is laminated or printed, partially in stripes or dots, onto the carrier layer, especially the laser varnish layer (2), the pressure sensitive and/or hotmelt adhesive being coated on the modified carrier layer.

6. Label according to any of Claims 1 to 5, charcterized in that the carrier layer (2) is composed of a varnish, particularly of a cured varnish, preferably a radiation cured varnish, with particular preference of an electron beam cured polyurethane acrylate varnish.

7. Label according to Claim 6, charcterized in that atop the varnish layer a second varnish layer (2) is applied and is subsequently cured.

8. Label according to Claim 6 or 7, charcterized in that the second varnish layer (3) has a thickness of from 1 to 20 µm, in particular from 5 to 15 µm, and the varnish layer (2) has a thickness of from 20 to 500 µm, in particular from 30 to 100 µm.

9. Label according to any of Claims 6 to 8, charcterized in that the two varnish layers (2, 3) exhibit maximum color contrast to one another.

10. Use of a label as claimed in at least one of the preceding claims in automotive construction.

## Revendications

1. Etiquette avec une sécurité élevée contre les contrefaçons constituée par au moins une couche support (2), une couche adhésive (1) étant présente sur la face inférieure de la couche support, **caractérisée en ce que** la couche adhésive (1) est constituée par un auto-adhésif et/ou un adhésif à chaud et un adhésif réactif activable à la chaleur.

2. Etiquette selon la revendication 1, **caractérisée en ce que** dans la couche adhésive (1), l'auto-adhésif et/ou l'adhésif à chaud sont mélangés avec l'adhésif réactif activable à la chaleur.

3. Etiquette selon les revendications 1 et 2, **caractérisée en ce que** dans la couche adhésive (1), l'auto-adhésif et/ou l'adhésif à chaud et l'adhésif réactif activable à la chaleur sont disposés partiellement en bandes ou en points.

4. Etiquette selon les revendications 1 à 3, **caractérisée en ce que**, dans la couche adhésive (1), on lamine ou imprime l'adhésif réactif activable à la chaleur sur l'auto-adhésif et/ou l'adhésif à chaud, partiellement en bandes ou en points.

5. Etiquette selon les revendications 1 à 3, **caractérisée en ce que**, dans la couche adhésive (1), on lamine ou imprime l'adhésif réactif activable à la chaleur partiellement en bandes ou en points sur le support en particulier la couche de laque au laser (2), l'auto-adhésif et/ou l'adhésif à chaud étant revêtu sur la couche support modifiée.

6. Etiquette selon les revendications 1 à 5, **caractérisée en ce que** la couche support (2) est constituée par une laque, en particulier une laque durcie, de préférence une laque durcie par un rayonnement, de manière particulièrement préférée une laque en polyuréthane-acrylate durcie par un rayonnement électronique.

7. Etiquette selon la revendication 6, **caractérisée en ce qu'**on applique sur la couche de laque une deuxième couche de laque (3) qui est ensuite durcie.

8. Etiquette selon les revendications 6 et 7, **caractérisée en ce que** la deuxième couche de laque (3) présente de préférence une épaisseur de 1 à 20 µm, en particulier de 5 à 15 µm et la couche de laque (2) présente une épaisseur de 20 à 500 µm, en particulier de 30 à 100 µm.

9. Etiquette selon les revendications 6 à 8, **caractérisée en ce que** les deux couches de laque (2,3) présentent un contraste de couleur maximal l'une par rapport à l'autre.

10. Utilisation d'une étiquette selon au moins l'une quelconque des revendications précédentes dans la construction automobile.
